# EUROPEAN PATENT SPECIFICATION

(11) **EP 1 622 980 B1**
(45) Date of publication and mention of the grant of the patent: **15.08.2007**
(21) Application number: 04752526.6
(22) Date of filing: 14.05.2004
(51) Int. Cl.: C08L 67/02

(54) **FAST CRYSTALLIZING POLYESTER COMPOSITIONS**
SCHNELL KRISTALLISIERENDE POLYESTERZUSAMMENSETZUNGEN
COMPOSITIONS DE POLYESTER A CRISTALLISATION RAPIDE

(30) Priority: 15.05.2003 US 470592 P; 15.05.2003 US 470756 P; 03.06.2003 US 475396 P
(43) Date of publication of application: 08.02.2006
(73) Proprietor: E.I. DUPONT DE NEMOURS AND COMPANY, Wilmington, Delaware 19898 (US)
(72) Inventor: ALMS, Gregory, R., Hockessin, DE 19707 (US); CROFT, Neil, J., Wilmington, DE 19810 (US); GRUNER, Christian, 50345 Huerth (DE); KOBAYASHI, Toshikazu, Chadds Ford, PA 19317 (US); MOLITOR, Michael, J., Wilmington, DE 19804 (US); BRISSOT Claire, F - 77370 Nangis (FR); STEGEN, Helga, 42277 Wuppertal (DE)
(74) Representative: Morf, Jan Stefan
(86) International application number: PCT/US2004/015526
(87) International publication number: WO 2004/104100

(56) References cited:
- EP-A- 0 390 489
- EP-A- 0 457 918
- WO-A-96/00752
- US-A- 4 322 335
- US-A- 4 548 978
- US-B1- 6 221 962
- PATENT ABSTRACTS OF JAPAN vol. 1999, no. 04, 30 April 1999 (1999-04-30) & JP 11 012428 A (TECHNO POLYMER KK), 19 January 1999 (1999-01-19)
- DATABASE WPI Section Ch, Week 199506 Derwent Publications Ltd., London, GB; Class A12, AN 1995-041468 XP002295849 & JP 06 322241 A (TOYOBO KK) 22 November 1994 (1994-11-22)
- DATABASE WPI Section Ch, Week 199021 Derwent Publications Ltd., London, GB; Class A23, AN 1990-160762 XP002295939 & JP 02 103257 A (NIPPON STEEL CHEM CO) 16 April 1990 (1990-04-16)
- DATABASE WPI Section Ch, Week 198424 Derwent Publications Ltd., London, GB; Class A23, AN 1984-149208 XP002295940 & JP 59 078254 A (KANEGAFUCHI CHEM KK) 7 May 1984 (1984-05-07)
- DATABASE WPI Section Ch, Week 199204 Derwent Publications Ltd., London, GB; Class A23, AN 1992-028952 XP002295941 & JP 03 275757 A (LION CORP) 6 December 1991 (1991-12-06)

## Description

### FIELD OF THE INVENTION

Fast crystallizing polyester compositions comprise an isotropic polyester, a liquid crystalline polymer, optionally a solid particulate material, and a plasticizer for the isotropic polyester.

### TECHNICAL BACKGROUND

Thermoplastic isotropic polyesters (IPEs) are important items of commerce, being used for fibers, molded and extruded parts, foams, and other uses. Many of these IPEs are semicrystalline, that is part of the IPE is in a crystalline form in the end use part. In semicrystalline polymers in general part of the polymer is present in an amorphous (often glassy) form, and part of the polymer is present as crystallites, usually distributed throughout the polymer. In most instances, it is preferred that IPEs which can crystallize be used in the semicrystalline form, and often it is helpful or necessary that the IPE crystallize relatively rapidly for the purpose of forming the final part.

For example, in injection molding of thermoplastics, the molten polymer is injected into a mold and rapidly cooled until it is solid. The mold is then opened and solid part is ejected from the mold. If the part is not solid and/or deforms easily upon ejection from the mold it may be deformed and thereby rendered useless. An important facet in have obtaining a relatively strong part from semicrystalline IPEs is that they be (at least partially) crystallized when they are removed from the mold. However some semicrystalline IPEs crystallize very slowly, so they would have to be in the mold a long time to allow them to be demolded without significant deformation. This would lead to long molding cycles, which is highly undesirable and uneconomic.

To solve this slow crystallization of some IPEs, so-called "crystallization packages" or "crystallization initiator systems" have been developed for slow crystallizing polyesters. These packages provide much faster crystallization initiation and/or faster crystallization itself and/or lower the crystallization temperature. For example poly(ethylene terephthalate) (PET) is a slow crystallizing IPE, and by itself is usually unsuitable for injection molding because of the very long molding cycles and/or high mold temperatures needed. However crystallization packages have been developed for this IPE, making it suitable for injection molding and other forming processes. A typical crystallization package for PET is a sodium ion source such as a sodium or a sodium salt of a carboxylate containing polymer and a small amount of plasticizer for the PET, see for instance U.S. Patent Re32,334. While not all IPEs are slow crystallizing, faster crystallization may lead to shorter melt processing cycle times which are more desirable.

U.S. Patent 6,221,962 describes compositions containing an LCP, a toughening agent with reactive functional groups, and a thermoplastic. The presence of specific compositions containing plasticizers is not mentioned.

U.S. Patent 4,753,980 describes polyester compositions containing certain toughening agents. The use of LCPs is not mentioned in the patent.

U.S. Patents 4,438,236 and 4,433,083 describe blends of LCPs with various thermoplastics. No specific mention is made of compositions containing polyesters and plasticizers.

S. H. Kim, et al., J. Appl. Polym. Sci., vol. 67, p. 1383-1392 (1998) reports that "... liquid crystalline polymer reinforcements with 10 wt % added accelerated the rate of crystallization of PET". No mention is made of the use of plasticizers in these compositions.

### SUMMARY OF THE INVENTION

This invention concerns a composition, comprising,
(a) at least 35 weight percent of a semicrystalline isotropic polyester (IPE) with a melting point of about 100°C or higher;
(b) about 0.1 to about 40 weight percent of a liquid crystalline polymer (LCP) whose melting point is at least 50°C higher than a cold crystallization point (CCP) of said isotropic polyester, or if said isotropic polyester has no cold crystallization point, said melting point of said liquid crystalline polymer is about 150°C or higher;
(c) 0.0 to about 60 weight percent of a solid particulate material; and
(d) about 0.2 to about 15 weight percent of a plasticizer for said isotropic polyester;
wherein the weight percentages of (a) and (c) are based on the weight of total composition, and the weight percentages of (b) and (d) are based on the weight of (a) in said composition.

This invention also concerns a process for the formation of a shaped part from an isotropic polyester, comprising, cooling a composition from a temperature above a melting point of said isotropic polyester to a temperature below said melting point, wherein said composition comprises:
(a) at least 35 weight percent of a semicrystalline isotropic polyester with a melting point of about 100°C or higher;
(b) about 0.1 to about 40 weight percent of a liquid crystalline polymer whose melting point is at least 50°C higher than a cold crystallization point of said isotropic polyester, or if said isotropic polyester has no cold crystallization point, said melting point of said liquid crystalline polymer is about 150°C or higher;
(c) 0.0 to about 60 weight percent of a solid particulate material; and
(d) about 0.2 to about 15 weight percent of a plasticizer for said isotropic polyester;
wherein the weight percentages of (a) and (c) are based on the weight of total composition, and the weight percentages of (b) and (d) are based on the weight of (a) in said composition.

Preferred composition for this process are also preferred for the composition (itself) described above.

### DETAILS OF THE INVENTION

Herein certain terms are used, and some of them are defined below.

By a "liquid crystalline polymer" is meant a polymer that is anisotropic when tested using the TOT test or any reasonable variation thereof, as described in U.S. Patent 4, 118, 372. Useful LCPs include polyesters, poly(ester-amides), and poly(ester-imides). One preferred form of LCP is "all aromatic", that is all of the groups in the polymer main chain are aromatic (except for the linking groups such as ester groups), but side groups which are not aromatic may be present.

By "isotropic" herein is meant a polymer which is isotropic when tested by the TOT test, described above. LCPs and isotropic polymers are mutually exclusive species. Preferably the IPE is a continuous phase in the composition. This can be determined by an appropriate form of microscopy.

By an "IPE" is meant a condensation polymer which is isotropic and in which more than 50 percent of the groups connecting repeat units are ester groups. Thus IPEs may include polyesters, poly(ester-amides) and poly(esterimides), so long as more than half of the connecting groups are ester groups. Preferably at least 70% of the connecting groups are esters, more preferably at least 90% of the connecting groups are ester, and especially preferably essentially all of the connecting groups are esters. The proportion of ester connecting groups can be estimated to a first approximation by the molar ratios of monomers used to make the IPE.

Unless otherwise noted, melting points are measured by ASTM Method D3418, using a heating rate of 10 °C/min. Melting points are taken as the maximum of the melting endotherm, and are measured on the first heat. If more than one melting point is present the melting point of the polymer is taken as the highest of the melting points. Except for LCPs, a melting point preferably has a heat of fusion of at least 3 J/g associated with that melting point. Melting points of LCPs are taken on the second heat.

Herein for the ingredients in the composition, including (a), b), (c) and (d) the use of the singular such as "an IPE" or "a particulate solid" also means the plural, that more than one of each these things which meets the limitations set forth herein may be present.

By a "particulate solid" is meant any solid (infusible at temperatures to which the composition is normally exposed) which is finely divided enough to be dispersed under melt mixing conditions (see below) into the composition. Typically the particulate solid will be a material which may already be used in thermoplastic compositions, such as pigments, reinforcing agents, and fillers. The particulate solid may or may not have a coating on it, for example a sizing and/or to improve adhesion of the particulate solid to the polymers of the composition. The particulate solid may be organic or inorganic. Useful particulate solids include minerals such as clay, talc, wollastonite, mica, and calcium carbonate; glass in various forms such as fibers, milled glass, solid or hollow spheres; carbon as black or fiber; titanium dioxide; aramid in the form of short fibers, fibrils or fibrids; and flame retardants such as antimony oxide, sodium antimonate, and appropriate infusible organic compounds. Preferred particulate solids are wollastonite, mica, talc, glass especially glass fiber, and calcium carbonate.

By a "CCP" is meant a value determined as follows. The "pure" (no other ingredients in the composition except small amounts of materials such as an antioxidant which may be needed to stabilize the IPE in the injection molding process) IPE or a composition containing the IPE is injection molded into a 1.59 mm (1/16") thick plaque using a mold whose temperature is 50°C. An appropriate sized sample (for the instrument) from the plaque is placed in a Differential Scanning Calorimeter (DSC) and heated from ambient temperature (approximately 20-35°C) at a rate of 10°C/min. The peak of the exotherm from crystallization of the IPE while it is being heated is taken as the CCP. The IPE has no CCP if there is no crystallization exotherm below the melting point of the IPE.

The "CCP" can also be determined by the "Quick Quench Method". In this method, the pure IPE or a composition containing the IPE is molded into a specimen bar. A sample from the specimen bar is placed in a DSC pan and heated quickly to above the melt point of the material (usually about 270°C for PET) then quickly quenched in a dry ice/acetone mixture or liquid nitrogen. The material is then place in a DSC and equilibrated to 0°C. Then the temperature is increased at 10.0°C/min to 290.0°C. The peak of the exotherm from crystallization of the IPE while it is being heated is taken as the CCP. The IPE has no CCP if there is no crystallization exotherm below the melting point of the IPE.

It is generally believed by those skilled in the art that, not only for a polyester which is difficult to crystallize, but for all semicrystalline polyesters, a lowering of the CCP from the CCP of the pure polymer indicates that a crystallization initiator system is present. For a given amount of crystallization initiator system, the more the CCP is lowered, the more efficient is that crystallization initiator system. Responses to the amount of crystallization initiator system are generally limited, with higher and higher amounts giving lesser or no advantage (little or no effect on lowering CCP).

By a "plasticizer" is typically meant a compound or mixture of compounds with a melting point of about 50°C or less with a(n) (average) molecular weight of 2000 or less. The plasticizer may be oligomeric, in which case its number average molecular weight (measured by Size Exclusion Chromatography using appropriate standards) is 2000 or less. These are typical properties of a plasticizer. For a further description of plasticizers see C. E. Carraher, Jr., Seymour/Carraher's Polymer Chemistry, 5th Ed., Marcel Dekker Inc., New York, 2000, p. 60 and p. 463-465.

By "all percents by weight are based on the total of all ingredients in the composition" is meant that these percents are based on the total amount of (a), (b), (c) and (d) present plus any other ingredients present in the composition.

The IPE used may be any IPE with the requisite melting point. Preferably the melting point of the IPE is about 150°C or higher, and more preferably about 200°C or higher. Polyesters (which have mostly or all ester linking groups) are normally derived from one or more dicarboxylic acids and one or more diols. In one preferred type of IPE the dicarboxylic acids comprise one or more of terephthalic acid, isophthalic acid and 2,6-naphthalene dicarboxylic acid, and the diol component comprises one or more of HO(CH₂)ₙOH (I), 1,4-cyclohexanedimethanol, HO(CH₂CH₂O)ₘCH₂CH₂OH (II), and HO(CH₂CH₂CH₂CH₂O)_{z}CH₂CH₂CH₂CH₂OH (III), wherein n is an integer of 2 to 10, m on average is 1 to 4, and is z an average of about 7 to about 40. Note that (II) and (III) may be a mixture of compounds in which m and z, respectively, may vary and hence since m and z are averages, they do not have to be integers. In preferred polyesters, n is 2, 3 or 4, and/or m is 1.

Specific preferred IPEs include poly(ethylene terephthalate) (PET), poly(1,3-propylene terephthalate) (PPT), poly.(1,4-butylene terephthalate) (PBT), a thermoplastic elastomeric polyester having poly(1,4-butylene terephthalate) and poly(tetramethyleneether)glycol blocks (available as Hytrel® from E. I. DuPont de Nemours & Co., Inc., Wilmington, DE 19898 USA), and poly(1,4-cylohexyldimethylene terephthalate) (PCT), and PET, is especially preferred. By "PET" herein is meant a polyester in which at least 80, more preferably at least 90, mole percent of the diol repeat units are from ethylene glycol and at least 80, more preferably at least 90, mole percent of the dicarboxylic acid repeat units are from terephthalic acid. If more than one IPE (with the proper melting points) is present, the total of such polymers in the composition is taken as component (a).

Preferably the solid particulate material is 0.2 to 60 weight percent of the total composition, more preferably about 5 to about 50 weight percent of the total composition.

Preferably the IPE is at least about 40 weight percent of the total composition, more preferably at least about 50 weight percent of the total composition.

Preferably the LCP is about 0.5 to about 20, more preferably about 1.0 to about 10, percent by weight of (a). Also preferably the LCP is in a discontinuous phase (as measured by an appropriate form of microscopy - if the particle size of the LCP is so small it can't be found by electron microscopy, it is assumed to be in a dispersed phase).

Preferably the plasticizer is about 0.5 to about 12 weight percent of the IPE [(a)], more preferably about 3.0 to about 10 percent of the IPE. One preferred type of plasticizer is a diester of a diol of the formula R¹CO₂R²O₂CR¹ wherein each R¹ is independently hydrocarbyl containing 1 to 20 carbon atoms, more preferably alkyl, and each R² (by this is meant R² in each molecule may vary somewhat) is alkylene optionally substituted with ether groups, containing 2 to 30 carbon atoms. By alkylene is meant is a divalent hydrocarbyl radical (containing on carbon and hydrogen) in which the free valencies are to two different alkyl (saturated) carbon atoms. Specific useful plasticizers include poly(ethylene glycol 400) di-2-ethylhexanoate and poly(ethylene glycol) dilaurate with a number average molecular weight of approximately 946. Other useful plasticizers will be found in U.S. Patents Re32,334 and 4,548,978.

Not all plasticizers useful for one particular IPE will necessarily be useful for another IPE, but often this will be the case.

Other ingredients, particularly those commonly used in thermoplastics, may also be added to the present composition in amounts commonly used in thermoplastics. Such materials include antioxidants, lubricant, mold release, flame retardants, (paint) adhesion promoters, other types of polymers (to form polymer blends), etc. Preferably the total of all these ingredients is less than about 60 weight percent, more preferably less than about 40, and especially preferably less than about 25 weight percent of the composition.

A preferred optional ingredient is a polymeric toughening agent. This is a polymer, typically which is an elastomer or has a relatively low melting point, generally <200°C, preferably <150°C, which has attached to it functional groups which can react with the IPE (and optionally other polymers present). Since IPEs usually have carboxyl and hydroxyl groups present, these functional groups usually can react with carboxyl and/or hydroxyl groups. Examples of such functional groups include epoxy, carboxylic anhydride, hydroxyl (alcohol), carboxyl, and isocyanato. Preferred functional groups are epoxy, and carboxylic anhydride, and epoxy is especially preferred. Such functional groups are usually "attached" to the polymeric toughening agent by grafting small molecules onto an already existing polymer or by copolymerizing a monomer containing the desired functional group when the polymeric tougher molecules are made by copolymerization. As an example of grafting, maleic anhydride may be grafted onto a hydrocarbon rubber using free radical grafting techniques. The resulting grafted polymer has carboxylic anhydride and/or carboxyl groups attached to it. An example of a polymeric toughening agent wherein the functional groups are copolymerized into the polymer is a copolymer of ethylene and a (meth)acrylate monomer containing the appropriate functional group. By (meth)acrylate herein is meant the compound may be either an acrylate, a methacrylate, or a mixture of the two. Useful (meth)acrylate functional compounds include (meth)acrylic acid, 2-hydroxyethyl(meth)acrylate, glycidyl(meth)acrylate, and 2-isocyanatoethyl (meth)acrylate. In addition to ethylene and a functional (meth)acrylate monomer, other monomers may be copolymerized into such a polymer, such as vinyl acetate, unfunctionalized (meth)acrylate esters such as ethyl (meth)acrylate, n-butyl (meth)acrylate, and cyclohexyl (meth)acrylate. Preferably the amount of polymeric toughening agent containing functional groups present is about 2 to about 40 percent by weight of (a), the IPE. Preferred tougheners include those listed in U.S. Patent 4,753,980. Especially preferred tougheners are copolymers of ethylene, ethyl acrylate or n-butyl acrylate, and glycidyl methacrylate.

It is preferred that the polymeric toughener contain about 0.5 to about 20 weight percent of monomers containing functional groups, preferably about 1.0 to about 15 weight percent, more preferably about 7 to about 13 weight percent of monomers containing functional groups. There may be more than one type of functional monomer present in the polymeric toughener. It has been found that toughness of the composition is increased by increasing the amount of polymeric toughener and/or the amount of functional groups. However, these amounts should preferably not be increased to the point that the composition may crosslink, especially before the final part shape is attained. Preferably there is about 2 to about 30 weight percent of the polymeric toughener in the composition, more preferably 5 to about 25 weight percent, and especially preferably about 10 to about 20 weight percent, of the total composition.

When a polymeric toughener, such as those described above, is added, it has been found that in many instances the particle size of the LCP in the composition is much reduced. For instance, in one composition the particle size of the LCP was about 2-5 µm, while in the same composition but containing a polymeric toughener the LCP particle size was about 0.2-0.5 µm.

Another preferred type of other ingredient is an epoxy compounds or resin. Preferably such a compound or resin has an average molecular weight of less than about 1000 (the polymeric toughening agent as described above, even if it does contain epoxy groups, is not considered herein part of this epoxy compound or resin). This epoxy material is preferably present at a level of 0.1 to about 1.0 weight percent of the entire composition. Useful epoxy compounds or resins include Epon® 1002F, 1009F or 1031, or Araldite® GT7099 or GT6099. It is believed that in some instance the epoxy compound or resin stabilizes melt viscosity and/or improves color stability of the composition. The latter is particularly important when an appearance part is not coated a paint or other coating.

It is to be understood that any preferred ingredient an/or ingredient amount may be combined with any other preferred ingredient and/or ingredient amount herein.

In one preferred type of composition less than 25 ppm, preferably less than 10 ppm of "free" metal cations such as alkali metal or alkaline earth metal cations are added to the composition. By "free" metal cations are meant cations which may readily react with functional groups which are present in the composition, such as carboxyl groups to form carboxylate salts. Free metal cations may be added as carboxylate salts such as acetates of 4-hydroxybenzoates, as other metal salts such as metal halides, and as metal salts of polymeric carboxylates. Not included in added free metal cations are normal impurities in the other ingredients or metal cations which are part of minerals or other compound, wherein the metal cations are tightly bound to that ingredient or mineral. As mentioned above some of the crystallization initiation systems for polyesters contain alkali or other metal cations. These are sometimes deleterious to the use of these compositions for electrical or electronic uses, where the metal ions can change the electrical properties of the composition. Similarly the presence of metal cations may lead to poorer hydrolysis or other chemical resistance problems. Such disadvantages are not evident in the present compositions. Also, it is believed that at least some polymeric tougheners are more effective or effective at lower amounts when metal cations are not present or present in only low amounts, especially when the counterion to the metal cation may be able to react with a functional group which is part of the polymeric toughener. Therefore the combination of low metal ion content and the presence of polymeric tougheners is preferred.

The compositions described herein can be made by typical melt mixing techniques. For instance the ingredients may be added to a single or twin screw extruder or a kneader and mixed in the normal manner, Preferably the temperature of the ingredients in at least part of the mixing apparatus is at or above the melting point of the LCP present (the measured or set temperature in any zone of the mixing apparatus may be below the actual material temperature because of mechanical heating). After the materials are mixed they may be formed (cut) into pellets or other particles suitable for feeding to a melt forming machine. Melt forming can be carried out by the usual methods for thermoplastics, such as injection molding, thermoforming, or extrusion, or any combination of these methods. Some of the ingredients such as fillers, plasticizers, and lubricants (mold release) may be added at one or more downstream points in the extruder, so as to decrease attrition of solids such as fillers, and/or improve dispersion, and/or decrease the thermal history of relatively thermally unstable ingredients, and/or decrease losses by evaporation of volatile ingredients.

As mentioned above parts of the present composition may be made by heating the composition above the melting point of the IPE (and hence melting the IPE), and then cooling them below the melting point to solidify the composition and formed a shaped part. Preferably the part is cooled at least 50°C below the melting point, more preferably at least 100°C below the melting point, or preferably below the CCP. Most commonly ultimately the composition will be cooled to ambient temperature, most typically 15-45°C.

The compositions described herein (often when having additional optional ingredients present) are particularly useful as "appearance parts", that is parts in which the surface appearance is important. This is applicable whether the composition's surface is viewed directly, or whether it is coated with paint or another material such as a metal. Such parts include automotive body panels such as fenders, fascia, hoods, tank flaps and other exterior parts; interior automotive panels; appliance parts such as handles, control panels, chassises (cases), washing machine tubs and exterior parts, interior or exterior refrigerator panels, and dishwasher front or interior panels; power tool housings such as drills and saws; electronic cabinets and housings such as personal computer housings, printer housings, peripheral housings, server housings; exterior and interior panels for vehicles such as trains, tractors, lawn mower decks, trucks, snowmobiles, aircraft, and ships; decorative interior panels for buildings; furniture such as office and/or home chairs and tables; and telephones and other telephone equipment. As mentioned above these parts may be painted or they may be left unpainted in the color of the composition.

The composition may be colored with pigments and/or dyes, so many color variations are possible. This type of coloration of parts made from the composition is particularly attractive economically, since such parts need not be subsequently coated (painted) in one or more additional steps. If extremely high gloss and/or distinctness of image are not needed, this is often a better overall alternative to coating. Alternatively of course parts made from this composition may also be coated (painted).

Another method of coloring the surface of parts made from these compositions (or variation thereof) is a dye sublimation (printing) process.

As mentioned above the present compositions or variations thereof may be used for automobile parts, especially automobile (car) bodies. Currently, there are three different approaches to the production of coated car bodies assembled from metal and plastic parts in a mixed construction:
1. The method known as the off-line process, in which the metal car body and the plastic parts are coated separately and then assembled.
   The drawback of the off-line process is its susceptibility to lack of visual harmonization of the coated metal and plastic surfaces, at least in cases where coated plastic parts and coated metal parts are subjected to direct visual comparison for reasons of construction, for example, owing to the virtually seamless proximity of the coated parts and/or arrangement of the coated parts in one plane.
   A further drawback is the necessity of operating two coating lines.
2. The method known as the in-line process in which the metal body already provided with an electrodeposition coating as a primer and the uncoated plastic parts or the plastic parts optionally only provided with a plastic primer are assembled and provided with one or more further coating layers in a subsequent common coating process.
   The drawback of the in-line process is the assembly step inserted into the coating process as an interruptive intermediate step which also involves the risk of introducing dirt into the further coating process.
3. The method known as the on-line process, in which the uncoated body parts made of metal and the uncoated plastic parts or the plastic parts optionally only provided with a plastic primer are assembled into a body constructed in a mixed construction and then passed through a common coating process including electrodeposition coating, wherein naturally only the electrically conductive metal parts are provided with an electrodeposition coating, while all the coating layers to be applied subsequently are applied both to the electrodeposition coated metal parts and to the plastic parts.

The on-line process is particularly preferred as it clearly separates the body base shell construction and the coating process and allows an undisturbed coating sequence.

Basically only adequately heat-resistant and simultaneously heat deformation-resistant plastics materials are suitable for the particularly preferred on-line process, since high temperatures are used in drying the electrodeposition coating.

Coating substrates car bodies assembled from metal parts and at least one plastic part (the composition described herein), with visible metal and plastic surfaces, comprising the successive steps:
(1) electrodeposition coating the substrates, removing non-deposited electrodeposition coating agent from the substrate and thermally cross-linking the deposited electrodeposition coating and thereby forming an electrodeposition coating primer on the metal surfaces,
(2) application and curing of at least one additional coating at least on all the visible metal and plastic surfaces, at least one of the plastic parts making up the visible plastic surfaces of the substrate having the composition described herein.

When they will be coated the plastic parts (of the composition described herein) may be pretreated in a conventional manner, for example, by UV irradiation, flame treatment or plasma treatment or be coated with a conventional plastic primer known to the person skilled in the art, in particular a conductive primer providing the plastic part with adequate electrical conductivity for electrostatically-assisted coatability, before they are assembled with the metal parts.

The metal parts and the at least one plastic part optionally provided with a plastic primer are assembled in the conventional manner known to the person skilled in the art, for example by screwing, clipping and/or adhesion, to form the substrate to be coated by the process according to the invention.

At least that (those) plastic part(s) of a substrate with the smallest possible joint width and in particular also in the same plane as the adjacent metal parts is (are) assembled with the metal parts.

Optionally, further plastic parts that are still missing from the body, if any, which in general will differ in composition from the at least one plastic part and which in general are less resistant to heat deformation can be fitted on after completion of step (1) of the process according to the invention and can also be subjected to the further coating process of step (2) (compare the in-line process described above) and/or be fitted on after completion of the process according to the invention in finished coated form (compare the off-line process described above).

In view of the application of at least one further coating layer, taking place in step (2) of the process according to the invention, preferably by electrostatically-assisted spray coating, it is expedient if the metal and plastic part(s) are assembled such that that they are not electrically insulated from one another; for example, a direct electric contact between the conductive primer and metal can be ensured by direct contact or via electrically conductive connecting elements, for example, metal screws.

To produce an anti-corrosive primer layer on the metal parts, the substrates assembled from metal parts and at least one plastic part in step (1) of the process according to the invention are coated in an electrodeposition coating bath in the conventional manner known to the person skilled in the art.

Suitable electrodeposition coating agents include conventional waterborne coating compositions with a solids content from, for example, 10 to 30 wt. percent.

The electrodeposition coating compositions may be conventional anodic electrodeposition coating agents known to the skilled person. The binder basis of the anodic electrodeposition coating compositions may be chosen at will. Examples of anodic electrodeposition binders are polyesters, epoxy resin esters, (meth)acrylic copolymer resins, Melanie oils or polybutadiene oils with a weight average molecular mass (Mw) of, for example, 300-10,000 and a carboxyl group content, for example, corresponding to an acid value of 35 to 300 mg OH/g. At least a part of the carboxyl groups is converted to carboxylate groups by neutralization with bases. These binders may be self cross-linking or cross-linked with separate cross-linking agents.

Preferably conventional cathodic electrodeposition coating agents known to the skilled person are used in the process according to the invention for the application of the electrodeposition coating layer. Cathodic electrodeposition coating compositions contain binders with cationic groups or groups which can be converted to cationic groups, for example, basic groups. Examples include amino, ammonium, e.g., quaternary ammonium, phosphonium and/or sulfonium groups. Nitrogen-containing basic groups are preferred; said groups may be present in the quaternized form or they are converted to cationic groups with a conventional neutralizing agent, e.g., an organic monocarboxylic acid such as, e.g., formic acid, lactic acid, methane sulfonic acid or acetic acid. Examples of basic resins are those with primary, secondary and/or tertiary amino groups corresponding to an amine value from, for example, 20 to 200 mg KOH/g. The weight average molecular mass (Mw) of the binders is preferably 300 to 10,000. Examples of such binders are amino(meth)acrylic resins, aminoepoxy resins, aminoepoxy resins with terminal double bonds, aminoepoxy resins with primary OH groups, aminopolyurethane resins, amino group-containing polybutadiene resins or modified epoxy resin-carbon dioxide-amine reaction products. These binders may be self-cross-linking or they may be used with known cross-linking agents in the mixture. Examples of such cross-linking agents include aminoplastic resins, blocked polyisocyanates, cross-linking agents with terminal double bonds, polyepoxy compounds or cross-linking agents containing groups capable of transesterification.

Apart from binders and any separate cross-linking agents, the electrodeposition coating compositions may contain pigments, fillers and/or conventional coating additives. Examples of suitable pigments include conventional inorganic and/or organic colored pigments and/or fillers, such as carbon black, titanium dioxide, iron oxide pigments, phthalocyanine pigments, quinacridone pigments, kaolin, talc or silicon dioxide. Examples of additives include, in particular, wetting agents, neutralizing agents, leveling agents, catalysts, corrosion inhibitors, anti-cratering agents, anti-foaming agents, solvents.

Electrodeposition coating takes place in a conventional manner known to the skilled person, for example, at deposition voltages from 200 to 500 V. After deposition of the electrodeposition coating, the substrate is cleaned from excess and adhering but non-deposited electrodeposition coating in a conventional manner known to the skilled person, for example, by rinsing with water. Thereafter the substrate is baked at oven temperatures of, for example, up to 220°C according to object temperatures of, for example, up to 200°C in order to crosslink the electrodeposition coating.

In the subsequent step (2) of the process according to the invention, at least one further coating layer is applied, preferably by spray application, in particular, electrostatically-assisted spray application, at least to all the visible metal and plastic surfaces on the substrates thus obtained and only provided with a baked electrodeposition coating layer on the metal surfaces.

If only one further coating layer is applied, this is generally a pigmented top coat. However, it is preferred to apply more than one further coating layer. Examples of conventional multicoat constructions formed from a plurality of coating layers are:
- primer surfacer/top coat.
- primer surfacer/base coat/clear coat,
- base coat/clear coat,
- primer surfacer substitute layer/base coat/clear coat.

Primer surfacers or primer surfacer substitute coatings are mainly used for stone-chip protection and surface leveling and prepare the surface for the subsequent decorative top coat which provides protection against environmental influences and is made of pigmented top coat or of color- and/or effect-producing base coat and protective clear coat.

The multicoat constructions mentioned by way of example may also be provided over the entire surface or part of the surface with a transparent sealing coat, in particular, providing high scratch-resistance.

All these coating layers following the electrodeposition coating layer may be applied from conventional coating agents well known to the person skilled in the art for applying the relevant coating layer. This can be a respective liquid coating agent containing, for example, water and/or organic solvents as diluents or a powder coating agent. The coating agents may be a single-component or multi-component coating agent; they may be physically drying or by oxidation or be chemically crosslinkable. In particular, primer surfacers, top coats, clear coats and sealing coats these are generally chemically cross-linking systems which can be cured thermally (by convection and/or by infrared irradiation) and/or by the action of energy-rich radiation, in particular ultraviolet radiation.

If more than one coating layer is applied in step (2) of the process according to the invention, the coating layers do not basically have to be cured separately prior to application of the respective subsequent coating layer. Rather, the coating layer can be applied according to the wet-on-wet principle known to the person skilled in the art, wherein at least two coating layers are cured together. In particular, for example, in the case of base coat and clear coat, following the application of the base coat, optionally followed by a short flash-off phase, the clear coat is applied and cured together with the base coat.

The on-line process according to the invention allows substrates assembled in a mixed construction from metal parts and plastic parts which are based on thermoplastics and are adequately resistant to heat deformation to be coated with excellent harmonization of the visual impression of the coated plastic and metal surfaces.

Nonappearance parts may also be made with these compositions. These are parts whose surface appearance is not critical. Such parts include those now made with so-called engineering thermoplastics, especially those which are filled with materials which are designed to enhance the composition's physical properties, such as stiffness, toughness and tensile strength.

CCP Done by one of two methods, Method A, injection molding into a 50°C mold as described above, or Method B, the Quick Quench method, also described above.

Melting point Determined by ASTM D3418-82, at a heating rate of 10°C/min. The peak of the melting endotherm is taken as the melting point.

Freeze Time Freeze time (sometimes called crystallization time) is defined as the inflection point in cavity pressure curve. A transducer placed behind an ejector pin located near the gate of the part is used to measure cavity pressure over time during the molding cycle. A time of zero seconds occurs when the screw begins to move forward at the start of injection cycle. A peak pressure occurs when the part been completely filled and the pressure remains essentially constant for the initial portion of the packing phase of the molding cycle. As the resin begins to crystallize, shrinkage occurs. Once the resin at the gate is fully crystallized, crystallization of resin in the cavity causes enough shrinkage that a reduction in the cavity pressure is seen. The cavity pressure continues to drop over time. The point at which the curve transitions from a concave to a convex shape is the inflection point and is defined as the freeze point.

Crystallization half life (CHL). This was done by a differential scanning calorimetry (DSC) method. In one sample preparation method the sample was simply used as was. In another method the sample was heated to 290°C, quenched and quenched in liquid nitrogen. With either preparation method the sample was then heated at a rate of 200°C/min to the desired temperature and the crystallization exotherm followed at that temperature in the DSC. From the exotherm curve generated with time, the crystallization half life at that temperature was then calculated.

### Compounding and Molding Method

All polymeric compositions were prepared by compounding in 30 mm Werner and Pfleiderer twin screw extruder. All ingredients were blended together and added to the rear (barrel 1) of the extruder except that Nyglos and other minerals were side-fed into barrel 5 (of 10 barrels) and the plasticizer was added using a liquid injection pump. Any exceptions to this method are noted in the examples. Barrel temperatures were set at 280-310°C resulting in melt temperatures 290-350°C depending on the composition and extruder rate and rpm of the screw.

Resins were molded into ASTM test specimens on a 3 or 6 oz injection molding machine. Melt temperature were 280-300°C, mold temperatures were 110-130°C.

In the Examples certain ingredients are used, and they are defined below:
CaCO₃ - particulate calcium carbonate, Super-Pflex® 200, available from Mineral Technologies, Inc., New York, NY 10174 USA).
Crystar® 3934 - PET homopolymer, IV = 0.67, available from E. I. DuPont de Nemours & Co., Inc., Wilmington, DE 19898 USA
glass fiber - PPG 3563 available from PPG Industries, Pittsburgh, PA 15272 USA.
Irganox® 1010 - antioxidant available from Ciba Specialty Chemicals, Tarrytown, NY 10591, USA.
LCP1 - 50/50/70/30/320 (molar parts) hydroquinone/4,4'-biphenol/terephthalic acid/2,6-napthalene dicarboxylic acid/4-hydroxybenzoic acid copolymer, melting point 334°C.
Licowax® PED521 - an oxidized polyethylene wax used as a mold lubricant available from Clariant Corp. D-65840 Sulzbach am Taunns, Germany.
Nyad® 1250 - wollastonite fibers with no sizing available from Nyco Minerals, Calgary, AB, Canada.
Nyglos® 4 - average approximately 9 µm length wollastonite fibers with no sizing available from Nyco Minerals, Calgary, AB, Canada.
Nyglos® 4W 20544 - average approximately 10 µm length sized wollastonite fibers, available from Nyco Minerals, Calgary, AB, Canada.
Plasthall® 809 - polyethylene glycol 400 di-2-ethylhexanoate.
Polymer A - ethylene/n-butyl acrylate/glycidyl methacrylate (66.75/28/5.25 wt. %) copolymer, melt index 12 g/10 min.
Polymer B - ethylene/n-butyl acrylate/glycidyl methacrylate (66/22/12 wt. %) copolymer, melt index 8 g/10 min.
RCL4 - Tiona® RCL4 titanium dioxide, a chloride process rutile-type TiO₂ surface treated with alumina and an organic substance, available from SMC Corp. of Baltimore, MD, U.S.A.
talc - Jetfil® 575C available from Luzenac America, Englewood, CO 80112 USA.

In the Examples, all compositional amounts shown are parts by weight. All compositions containing PET also contain 0.3 wt. % Irganox® 1010, and 0.5 wt. % PED521.

### Example 1

Compositions were made using the standard method. The CCP was determined using Method A. Compositions and CCPs are given in Table 1.

**Table 1**

| State | Crystar® 3934 | LCP1 | Nyglos® 4W | Plasthall® 809 | CCP, °C |
|---|---|---|---|---|---|
| | | | | | |
| A | 100.0 | | | | 127.9 |
| B | 97.0 | | | 3.0 | 119.5 |
| C | 92.0 | 5.0 | | 3.0 | 114.4 |
| D | 95.0 | 5.0 | | | 122.2 |
| E | 82.0 | | 15.0 | 3.0 | 121.3 |
| F | 80.0 | 5.0 | 15.0 | | 122.8 |

### Example 2

Compositions were made using the standard method. The CCP was determined using Method A. Compositions and CCPs are given in Table 2.

**Table 2**

| State | Crystar® 3934 | LCP1 | Nyglos® 4W | Plasthall® 809 | CCP, °C |
|---|---|---|---|---|---|
| | | | | | |
| A | 87.0 | 0.0 | 10.0 | 3.0 | 117.3 |
| B | 87.0 | 1.0 | 9.0 | 3.0 | 115.5 |
| C | 87.0 | 3.0 | 7.0 | 3.0 | 112.9 |
| D | 87.0 | 7.0 | 3.0 | 3.0 | 109.9 |
| E | 87.0 | 9.0 | 1.0 | 3.0 | 111.4 |
| F | 87.0 | 10.0 | 0.0 | 3.0 | 110.1 |

### Example 3

Compositions were made using the standard method. Each fillers was present in the amount of 15 parts by weight. The CCP was determined using Method A, except for states C and D which used Method B. Compositions and CCPs are given in Table 3.

**Table 3**

| State | Crystar® 3934 | LCP1 | Filler | Plasthall® 809 | CCP, °C |
|---|---|---|---|---|---|
| | | | | | |
| A | 77.0 | 5.0 | glass fiber | 3.0 | 109.3 |
| B | 77.0 | 5.0 | Nyad® 1250 | 3.0 | 112.0 |
| C | 77.0 | 5.0 | CaCO₃ | 3.0 | 105.7 |
| D | 77.0 | 5.0 | RCL4 | 3.0 | 118.1 |
| E | 77.0 | 5.0 | talc | 3.0 | 116.3 |
| F | 77.0 | 5.0 | Nylgos® 4 | 3.0 | 110.8 |

### Example 4

Compositions were made using the standard method. The polymer compositions were molded with a melt temperature of 284-286°C, a mold temperature of 109-100°C, a cycle time of 39-40 sec, a hold/pack pressure of 80 MPa, and a fill speed of 19.1 mm/sec. Physical property testing was done according to standard ISO methods. The freeze times shown are comparative times with a commercial PET injection molding resin, Rynite® 530 BK503 (available from E. I. DuPont de Nemours & Co., Inc., Wilmington, DE 19898 USA), which contains 30 weight percent glass fibers and a crystallization package which includes a sodium source and Plasthall® 809, but no polymers similar to Polymers A and B. A positive number indicates that the freezing time was longer than Rynite® 530, while a negative number indicates the freezing time was shorter than Rynite® 530. Compositions and results are shown in Table 4.

**Table 4**

| State | A | B | C | D | E | F | G |
|---|---|---|---|---|---|---|---|
| | | | | | | | |
| Crystar® 3934 | 81.2 | 61.2 | 71.2 | 71.2 | 75.2 | 65.2 | 56.2 |
| LCP1 | | 5 | 5 | 5 | 1 | 1 | 10 |
| Polymer B | | 15 | | 5 | 5 | 15 | 15 |
| Polymer A | | | 5 | | | | |
| Irganox® 1010 | 0.3 | 0.3 | 0.3 | 0.3 | 0.3 | 0.3 | 0.3 |
| PED521 | 0.5 | 0.5 | 0.5 | 0.5 | 0.5 | 0.5 | 0.5 |
| Nyglos® 4W 20544 | 15 | 15 | 15 | 15 | 15 | 15 | 15 |
| Plasthall® 809 | 3 | 3 | 3 | 3 | 3 | 3 | 3 |
| | | | | | | | |
| Tensile Strength, MPa | 72.2 | 39.4 | 51.1 | 53.2 | 55.2 | 39.0 | 39.0 |
| Tensile Elongation, % | 2.9 | 27 | 7 | 10 | 12 | 35 | 25 |
| Tensile Modulus, GPa | 5.8 | 3.65 | 4.62 | 4.52 | 4.67 | 3.44 | 3.39 |
| Flexural Strength, MPa | 130 | 76.6 | 102 | 103 | 106 | 76.6 | 73.7 |
| Flexural Modulus, GPa | 5.64 | 3.80 | 4.82 | 4.75 | 4.84 | 3.72 | 3.65 |
| | | | | | | | |
| Approx. Freeze Time , sec | 2 | -3 | 0 | -0.5 | 0 | -1.5 | -3.5 |

### Example 5

Compositions containing Crystar® 3934, Plasthall® 809 and LCP1 were made by melt mixing using a twin screw extruder, and these compositions ("States") together with their constituents are shown in Table 5. The CCP and CHL (at 110°C) of these states were measured, and the results are also shown in Table 5. These show that a combination of an LCP and a plasticizer is very effective in nucleating and accelerating the crystallization of the Crystar® 3934.

**Table 5**

| State | Crystar® 3934 | LCP1 | Plasthall® 809 | CCP, °C | CHL, min |
|---|---|---|---|---|---|
| | | | | | |
| A | 100.0 | | | 131.5° | 4.87min |
| B | 99.0 | 1.0 | | 124.5° | 3.28min |
| C | 97.0 | 3.0 | | 124.1 | 2.98min |
| D | 95.0 | 5.0 | | 124.5° | 2.28min |
| E | 99.0 | | 1.0 | 128.8° | 5.08min |
| F | 97.0 | | 3.0 | 122.0° | 1.68min |
| G | 95.0 | | 5.0 | 117.9° | 0.98min |
| H | 98.0 | 1.0 | 1.0 | 123.2° | 2.48min |
| I | 96.0 | 3.0 | 1.0 | 121.3° | 1.77min |
| J | 94.0 | 5.0 | 1.0 | 119.8° | 1.62min |
| K | 96.0 | 1.0 | 3.0 | 114.9° | 1.22min |
| L | 94.0 | 3.0 | 3.0 | 114.8° | 0.88min |
| M | 92.0 | 5.0 | 3.0 | 113.6° | 0.75min |
| N | 94.0 | 1.0 | 5.0 | 110.1° | 0.67min |
| O | 92.0 | 3.0 | 5.0 | 109.0° | 0.55min |
| P | 90.0 | 5.0 | 5.0 | 108.1° | 0.40min |

### Example 6

Production of a steel/plastics substrate: A 13 cm x 13 cm plastics panel made from the composition of State B of Example 4 was stuck using double-sided adhesive tape onto a 30 cm x 60 cm panel of bodywork steel in such a manner that two common edges were formed. Before being adhered, the plastics panel was provided with a conductive primer (two-component primer, conductive, R 82913 from DuPont Performance Coatings GmbH & Co. KG, Wuppertal, Germany) to a dry film thickness of 15 µm.

Preparation of a cathodic electrodeposition coating bath: A cathodic electrodeposition coating bath with a solids content of 18 wt. percent was prepared by mixing 4356 g of an aqueous cathodic electrodeposition binder dispersion (Herberts AQUA EC 2000, R 39660 from DuPont Performance Coatings GmbH & Co. KG, Wuppertal) with 1408 g of a cathodic electrodeposition pigment paste (Herberts AQUA EC 2000, R 39661 from DuPont Performance Coatings GmbH & Co. KG, Wuppertal) and dilution with 5236 g of deionized water.

Production of the multilayer coating: The steel/plastics substrate was coated to a dry film thickness of 20 µm in the cathodic electrodeposition (CED) coating bath according to Example (coating conditions: two minutes at 30°C with a deposition voltage of 320 V; baking conditions: 20 minutes at 175°C object temperature). The steel/plastics substrate provided in this manner with a CED coating layer only on the metal surface was then coated to a dry film thickness of 35 µm with a white aqueous filler (Herberts Aqua-Fill R 63520 from DuPont Performance Coatings GmbH & Co. KG, Wuppertal) and, after 10 min flashing off at 80°C, was baked for 25 min at 160°C (object temperature). The steel/plastics substrate now coated over its entire surface with the white aqueous filler layer was then coated to a dry film thickness of 12 µm with a black metallic water-borne base coat (Herberts Aqua-Base R 65949 from DuPont Performance Coatings GmbH & Co. KG, Wuppertal) and, after 10 min flashing off at 80°C, was coated to a dry film thickness of 35 µm with a two-component polyurethane clear coat (2K-Clear R 40491 from DuPont Performance Coatings GmbH & Co. KG, Wuppertal) and, after 5 min flashing off at 23°C, was baked for 20 min at 135°C (object temperature). All the spray coatings were applied in each case with the steel/plastics substrate in a vertical position. All flashing-off, drying and baking operations were performed in the horizontal position.

Evaluation simply with the naked eye revealed virtually no visible differences in appearance (gloss, roughness) between the coated plastics and steel surfaces. Using a BYK Wavescan instrument[for the optical surface characterization of painted surfaces the "Wave Scan" (Byk-Gardner GmbH, D-82538 Geretsried, Germany) can be used. The Wave Scan is an orange peel meter, simulates the visual evaluation of surface smoothness.], a shortwave value of 21 was measured for the coated plastics surface, while the value for the coated steel surface was 6. This shows the excellent coated surface obtained on both the steel and plastic substrates.

## Claims

1. A composition, comprising,
(a) at least 35 weight percent of a semicrystalline isotropic polyester with a melting point of about 100 °C or higher;
(b) about 0.1 to about 40 weight percent of a liquid crystalline polymer whose melting point is at least 50°C higher than a cold crystallization point of said isotropic polyester, or if said isotropic polyester has no cold crystallization point, said melting point of said liquid crystalline polymer is about 150°C or higher;
(c) 0.0 to about 60 weight percent of a solid particulate material; and
(d) about 0.2 to about 15 weight percent of a plasticizer for said isotropic polyester;
wherein the weight percentages of (a) and (c) are based on the weight of total composition, and the weight percentages of (b) and (d) are based on the weight of (a) in said composition.

2. The composition as recited in claim 1 wherein said isotropic polyester has a melting point of about 200° or more.

3. The composition as recited in claim 1 or 2 wherein said isotropic polyester consists essentially of repeat units derived from one or more of terephthalic acid, isophthalic acid and 2,6-naphthalene dicarboxylic acid, and repeat units derived from one or more of HO(CH₂)ₙOH, 1,4-cyclohexanedimethanol, HO (CH₂CH₂O)ₘCH₂CH₂OH, and HO(CH₂CH₂CH₂CH₂O)_{z}CH₂CH₂CH₂CH₂OH, wherein n is an integer of 2 to 10, m is an average of 1 to 4, and z is an average of about 7 to about 40.

4. The composition as recited in any one of the preceding claims wherein said isotropic polyester is poly(ethylene terephthalate), poly(1,3-propylene terephthalate), poly(1,4-butylene terephthalate), or poly(1,4-cylohexyldimethylene terephthalate).

5. The composition as recited in any one of the preceding claims wherein said plasticizer is about 3.0 to about 10 weight percent of said isotropic polyester.

6. The composition as recited in any one of the preceding claims wherein said plasticizer has the formula R¹CO₂R²O₂CR¹ wherein each R¹ is hydrocarbyl containing 1 to 20 carbon atoms and each R² is alkylene optionally substituted with one or more ether groups and containing 2 to 30 carbon atoms.

7. The composition as recited in any one of the preceding claims wherein said liquid crystalline polymer is about 1.0 to about 10 weight percent of said isotropic polyester.

8. The composition as recited in any one of the preceding claims wherein said solid particulate material is about 5 to about 50 weight percent of said total composition.

9. The composition as recited in any one of the preceding claims additionally comprising a polymeric toughening agent containing one or more types of groups which can react with the isotropic polyester.

10. The composition as recited in claim 9 wherein said functional group is epoxy or carboxylic anhydride.

11. The composition as recited in claim 9 wherein said functional group is epoxy.

12. The composition as recited in claim 11 wherein said polymeric toughening agent comprises repeat units derived from an epoxy containing (meth)acrylate and ethylene.

13. The composition as recited in any one of the preceding claims which additionally comprises an epoxy compound or resin.

14. The composition as recited in any one of the preceding claims which contains less than 25 ppm free metal cation.

15. An appearance part comprising the composition of claim 1.

16. The appearance part as recited in claim 15 which is pigmented.

17. The appearance part as recited in claim 15 which is coated.

18. The appearance part as recited in any one of claims 15-17 which is an automotive body panel, appliance part, power tool housing, electronic cabinet or housing, exterior or interior panel for a vehicle, decorative interior panel for a building, furniture, or telephones or telephone equipment.

19. A process for the formation of a shaped part from an isotropic polyester, comprising, cooling a composition from a temperature above a melting point of said isotropic polyester to a temperature below said melting point, wherein said composition comprises:
(a) at least 35.weight percent of a semicrystalline isotropic polyester with a melting point of about 100°C or higher;
(b) about 0.1 to about 40 weight percent of a liquid crystalline polymer whose melting point is at least 50°C higher than a cold crystallization point of said isotropic polyester, or if said isotropic polyester has no cold crystallization point, said melting point of said liquid crystalline polymer is about 150°C or higher;
(c) 0.0 to about 60 weight percent of a solid particulate material; and
(d) about 0.2 to about 15 weight percent of a plasticizer for said isotropic polyester;
wherein the weight percentages of (a) and (c) are based on the weight of total composition, and the weight percentages of (b) and (d) are based on the weight of (a) in said composition.

20. The process as recited in claim 19 wherein said isotropic polyester has a melting point of about 200° or more.

21. The process as recited in claim 19 or 20 wherein said isotropic polyester consists essentially of repeat units derived from one or more of terephthalic acid, isophthalic acid and 2,6-naphthalene dicarboxylic acid, and repeat units derived from one or more of HO(CH₂)ₙOH, 1,4-cyclohexanedimethanol, HO (CH₂CH₂O)ₘCH₂CH₂OH, and HO (CH₂CH₂CH₂CH₂O)_{z}CH₂CH₂CH₂CH₂OH, wherein n is an integer of 2 to 10, m is an average of 1 to 4, and z is an average of about 7 to about 40.

22. The process as recited in any one of claims 19-21 wherein said isotropic polyester is poly(ethylene terephthalate), poly(1,3-propylene terephthalate), poly(1,4-butylene terephthalate), or poly(1,4-cylohexyldimethylene terephthalate).

23. The process as recited in any one of claims 19-22 wherein said plasticizer is about 3.0 to about 10 weight percent of said isotropic polyester.

24. The process as recited in any one of claims 19-23 wherein said liquid crystalline polymer is about 1.0 to about 10 weight percent of said isotropic polyester.

25. The process as recited in any one of claims 19-24 wherein said solid particulate material is about 5 to about 50 weight percent of said total composition.

26. The process as recited in any one of claims 19-25 additionally comprising a polymeric toughening agent containing one or more types of functional groups which can react with the isotropic polyester.

27. The process as recited in claim 26 wherein said functional group is epoxy.

28. The process as recited in claim 27 wherein said polymeric toughening agent comprises repeat units derived from an epoxy containing (meth)acrylate and ethylene.

29. The process as recited in any one of claims 19-28 wherein said composition contains less than 25 ppm free metal cation.

## Patentansprüche

1. Zusammensetzung, aufweisend:
(a) mindestens 35 Gew.% eines halbkristallinen isotropen Polyesters mit einem Schmelzpunkt von etwa 100°C oder höher;
(b) etwa 0,1 % bis etwa 40 Gew.% eines flüssigkristallinen Polymers, dessen Schmelzpunkt um mindestens 50°C höher ist als ein Kalt-Kristallisationspunkt des isotropen Polyesters oder, wenn der isotrope Polyester keinen Kalt-Kristallisationspunkt hat, der Schmelzpunkt des flüssigkristallinen Polymers etwa 150°C oder höher ist;
(c) Null Prozent bis etwa 60 Gew.% eines festen partikulären Materials und
(d) etwa 0,2% bis etwa 15 Gew.% eines Weichmachers für den isotropen Polyester;
wobei die prozentualen Gewichtsangaben von (a) und (c) auf das Gewicht der gesamten Zusammensetzung bezogen sind und die prozentualen Gewichtsangaben von (b) und (d) auf das Gewicht von (a) in dieser Zusammensetzung bezogen sind.

2. Zusammensetzung nach Anspruch 1, worin der isotrope Polyester einen Schmelzpunkt von etwa 200°C oder mehr hat.

3. Zusammensetzung nach Anspruch 1 oder 2, worin der isotrope Polyester im Wesentlichen besteht aus repetierenden Einheiten, die deriviert sind von einem oder mehreren der Folgenden: Terephthalsäure, Isophthalsäure und 2,6-Naphthalendicarbonsäure; sowie aus repetierenden Einheiten, die deriviert sind von einem oder mehreren der Folgenden: HO(CH₂)ₙOH, 1,4-Cyclohexandimethanol, HO(CH₂CH₂O)ₘCH₂CH₂OH und HO(CH₂CH₂CH₂CH₂O)₂CH₂CH₂CH₂CH₂OH, worin n eine ganze Zahl von 2 bis 10 ist, m ist ein Mittelwert von 1 bis 4 und z ist ein Mittelwert von etwa 7 bis etwa 40.

4. Zusammensetzung nach einem der vorgenannten Ansprüche, worin der isotrope Polyester Poly(ethylenterephthalat), Poly(1,3-propylenterephthalat), Poly(1,4-butylenterephthalat) oder Poly(1,4-cyclohexyldimethylenterephthalat) ist.

5. Zusammensetzung nach einem der vorgenannten Ansprüche, worin der Weichmacher etwa 3,0% bis etwa 10 Gew.% des isotropen Polyesters beträgt.

6. Zusammensetzung nach einer der vorgenannten Ansprüche, worin der Weichmacher die Formel hat:
R¹CO₂R²O₂CR¹
worin jedes R¹ ein Hydrocarbyl ist, das 1 bis 20 Kohlenstoffatome enthält, und jedes R² Alkylen ist, das wahlweise substituiert ist mit einer oder mehreren Ether-Gruppen, und 2 bis 30 Kohlenstoffatome enthält.

7. Zusammensetzung nach einem der vorgenannten Ansprüche, worin das flüssigkristalline Polymer etwa 1,0% bis etwa 10 Gew.% des isotropen Polyesters beträgt.

8. Zusammensetzung nach einem der vorgenannten Ansprüche, worin das feste partikuläre Material etwa 5% bis etwa 50 Gew.% der gesamten Zusammensetzung beträgt.

9. Zusammensetzung nach einem der vorgenannten Ansprüche, zusätzlich aufweisend einen polymeren schlagzähmachenden Zusatzstoff, der ein oder mehrere Typen funktioneller Gruppen enthält, die mit dem isotropen Polyester reagieren können.

10. Zusammensetzung nach Anspruch 9, worin die funktionelle Gruppe Epoxy oder Carbonsäureanhydrid ist.

11. Zusammensetzung nach Anspruch 9, worin die funktionelle Gruppe Epoxy ist.

12. Zusammensetzung nach Anspruch 11, worin der polymere schlagzähmachende Zusatzstoff repetierende Einheiten aufweist, die deriviert sind von einem (Meth)acrylat, umfassend Epoxy, und Ethylen.

13. Zusammensetzung nach einem der vorgenannten Ansprüche, die zusätzlich eine Epoxy-Verbindung oder -Harz aufweist.

14. Zusammensetzung nach einem der vorgenannten Ansprüche, die weniger als 25 ppm freies Metallkation enthält.

15. Bauteil für ein besonderes Aussehen, welches die Zusammensetzung nach Anspruch 1 aufweist.

16. Bauteil für ein besonderes Aussehen nach Anspruch 15, welches pigmentiert ist.

17. Bauteil für ein besonderes Aussehen nach Anspruch 15, welches beschichtet ist.

18. Bauteil für ein besonderes Aussehen nach einem der Ansprüche 15 bis 17, das ein Karosseriebauteil ist, ein Geräteteil ist, ein Maschinengehäuse ist, ein Elektronikschaltschrank oder -gehäuse ist, eine Außen- oder Innenverkleidung für ein Fahrzeug ist, eine dekorative Innenverkleidung bei einem Gebäude ist, ein Möbel oder für Telefone oder Telefonanlagen dient.

19. Verfahren für die Erzeugung eines Formteils aus einem isotropen Polyester, umfassend: Kühlen einer Zusammensetzung von einer Temperatur oberhalb des Schmelzpunktes des isotropen Polyesters bis zu einer Temperatur unterhalb dieses Schmelzpunktes, wobei die Zusammensetzung aufweist:
(a) mindestens 35 Gew.% eines halbkristallinen isotropen Polyesters mit einem Schmelzpunkt von etwa 100°C oder höher;
(b) etwa 0,1% bis etwa 40 Gew.% eines flüssigkristallinen Polymers, dessen Schmelzpunkt mindestens 50°C höher ist als der Kalt-Kristallisationspunkt des isotropen Polyesters oder, wenn der isotrope Polyester keinen Kalt-Kristallisationspunkt hat, der Schmelzpunkt des flüssigkristallinen Polymers etwa 150°C oder höher ist;
(c) Null Prozent bis etwa 60 Gew.% eines festen partikulären Materials und
(d) etwa 0,2% bis etwa 15 Gew.% eines Weichmachers für den isotropen Polyester;
wobei die prozentualen Gewichtsanteile von (a) und (c) auf das Gewicht der gesamten Zusammensetzung bezogen sind und die prozentualen Gewichtsanteile von (b) und (d) auf das Gewicht von (a) in dieser Zusammensetzung bezogen sind.

20. Verfahren nach Anspruch 19, bei welchem der isotrope Polyester einen Schmelzpunkt von etwa 200°C oder mehr hat.

21. Verfahren nach Anspruch 19 oder 20, bei welchem der isotrope Polyester im wesentlichen aus repetierenden Einheiten besteht, die deriviert sind von einem oder mehreren der Folgenden: Terephthalsäure, Isophthalsäure und 2,6-Naphthalendicarbonsäure; sowie von repetierenden Einheiten, die deriviert sind von einem oder mehreren der Folgenden: HO(CH₂)ₙOH, 1,4-Cyclohexandimethanol, HO(CH₂CH₂O)ₘ CH₂CH₂OH und HO(CH₂CH₂CH₂CH₂O)_{z}CH₂CH₂CH₂CH₂OH, worin n eine ganze Zahl von 2 bis 10 ist, m ist ein Mittelwert von 1 bis 4 und z ist ein Mittelwert von etwa 7 bis etwa 40.

22. Verfahren nach einem der Ansprüche 19 bis 21, bei welchem der isotrope Polyester Poly(ethylenterephthalat) ist, Poly(1,3-propylenterephthalat), Poly(1,4-butylenterephthalat) oder Poly(1,4-cyclohexyldimethylenterephthalat).

23. Verfahren nach einem der Ansprüche 19 bis 22, bei welchem der Weichmacher etwa 3,0% bis etwa 10 Gew.% des isotropen Polyesters beträgt.

24. Verfahren nach einem der Ansprüche 19 bis 23, bei welchem das flüssigkristalline Polymer etwa 1,0% bis etwa 10 Gew.% des isotropen Polyesters beträgt.

25. Verfahren nach einem der Ansprüche 19 bis 24, bei welchem das feste partikuläre Material etwa 5% bis etwas 50 Gew.% dieser gesamten Zusammensetzung beträgt.

26. Verfahren nach einem der Ansprüche 19 bis 25, zusätzlich umfassend einen polymeren schlagzähmachenden Zusatzstoff, der ein oder mehrere Typen funktioneller Gruppen enthält, die mit dem isotropen Polyester reagieren können.

27. Verfahren nach Anspruch 26, bei welchem die funktionelle Gruppe ein Epoxy ist.

28. Verfahren nach Anspruch 27, bei welchem der polymere schlagzähmachende Zusatzstoff repetierende Einheiten aufweist, die deriviert sind von einem (Meth)acrylat, umfassend Epoxy, und Ethylen.

29. Verfahren nach einem der Ansprüche 19 bis 28, bei welchem die Zusammensetzung weniger als 25 ppm freies Metallkation enthält.

## Revendications

1. Composition, comprenant,
(a) au moins 35 pour cent en poids d'un polyester isotropique semi-cristallin ayant un point de fusion d'environ 100°C ou plus;
(b) environ 0,1 à environ 40 pour cent en poids d'un polymère cristallin liquide dont le point de fusion est au moins 50°C supérieur au point de cristallisation à froid dudit polyester isotropique ou, si ledit polyester isotropique n'a pas de point de cristallisation à froid, ledit point de fusion dudit polymère cristallin liquide est d'environ 150°C ou plus;
(c) 0,0 à environ 60 pour cent en poids d'un matériau particulaire solide; et
(d) environ 0,2 à environ 15 pour cent en poids d'un plastifiant pour ledit polyester isotropique;
dans laquelle les pourcentages en poids de (a) et de (c) sont par rapport au poids de la composition totale, et les pourcentages en poids de (b) et de (d) sont par rapport au poids de (a) dans ladite composition.

2. Composition selon la revendication 1, dans laquelle ledit polyester isotropique a un point de fusion d'environ 200° ou plus.

3. Composition selon la revendication 1 ou 2, dans laquelle ledit polyester isotropique consiste essentiellement en motifs répétés issus d'un ou plusieurs parmi l'acide téréphtalique, l'acide isophtalique et l'acide 2,6-naphtalène dicarboxylique, et en motifs répétés issus d'un ou plusieurs parmi HO(CH₂)ₙOH, 1,4-cyclohexanediméthanol, HO(CH₂CH₂O)ₘCH₂CH₂OH, et HO(CH₂CH₂CH₂CH₂O)_{z}CH₂CH₂CH₂CH₂OH, où n est un entier de 2 à 10, m est une moyenne de 1 à 4 et z est une moyenne d'environ 7 à environ 40.

4. Composition selon l'une quelconque des revendications précédentes, dans laquelle ledit polyester isotropique est un poly(téréphtalate d'éthylène), un poly(téréphtalate de 1,3-propylène), un poly(téréphtalate de 1,4-butylène) ou un poly(téréphtalate de 1,4-cyclohexyldiméthylène).

5. Composition selon l'une quelconque des revendications précédentes, dans laquelle ledit plastifiant représente environ 3,0 à environ 10 pour cent en poids dudit polyester isotropique.

6. Composition selon l'une quelconque des revendications précédentes, dans laquelle ledit plastifiant a la formule R¹CO₂R²O₂CR¹ où chaque R¹ est un hydrocarbyle contenant 1 à 20 atomes de carbone et chaque R² est alkylène facultativement substitué par un ou plusieurs groupes éthers et contenant 2 à 30 atomes de carbone.

7. Composition selon l'une quelconque des revendications précédentes, dans laquelle ledit polymère cristallin liquide représente environ 1,0 à environ 10 pour cent en poids dudit polyester isotropique.

8. Composition selon l'une quelconque des revendications précédentes, dans laquelle ledit matériau particulaire représente environ 5 à environ 50 pour cent en poids de ladite composition totale.

9. Composition selon l'une quelconque des revendications précédentes, comprenant de plus un agent renforçant polymère contenant une ou plusieurs sortes de groupes fonctionnels qui peuvent réagir avec le polyester isotropique.

10. Composition selon la revendication 9, dans laquelle ledit groupe fonctionnel est époxy ou anhydride carboxylique.

11. Composition selon la revendication 9, dans laquelle ledit groupe fonctionnel est époxy.

12. Composition selon la revendication 11, dans laquelle ledit agent renforçant polymère comprend des motifs répétés issus d'un (méth)acrylate contenant époxy et d'éthylène.

13. Composition selon l'une quelconque des revendications précédentes, qui comprend de plus un composé ou une résine époxy.

14. Composition selon l'une quelconque des revendications précédentes, qui contient moins de 25ppm de cation métallique libre.

15. Pièce d'apparence comprenant la composition selon la revendication 1.

16. Pièce d'apparence selon la revendication 15, qui est pigmentée.

17. Pièce d'apparence selon la revendication 15; qui est revêtue.

18. Pièce d'apparence selon l'une quelconque des revendications 15-17, qui est un panneau de carrosserie automobile, une pièce d'appareil ménager, un boîtier pour outil électrique, une armoire ou un boîtier pour matériel électronique, un panneau extérieur ou intérieur pour un véhicule, un panneau intérieur décoratif pour un bâtiment, un meuble, ou des téléphones ou un matériel téléphonique.

19. Procédé pour la formation d'une pièce façonnée à partir d'un polyester isotropique, comprenant le refroidissement d'une composition à partir d'une température supérieure au point de fusion dudit polyester isotropique à une température en dessous dudit point de fusion, dans lequel ladite composition comprend:
(a) au moins 35 pour cent en poids d'un polyester isotropique semi-cristallin ayant un point de fusion d'environ 100°C ou plus;
(b) environ 0,1 à environ 40 pour cent en poids d'un polymère cristallin liquide dont le point de fusion est au moins 50°C plus élevé que le point de cristallisation à froid dudit polyester isotropique ou, si ledit polyester isotropique n'a pas de point de cristallisation à froid, ledit point de fusion dudit polymère cristallin liquide est d'environ 150°C ou plus;
(c) 0,0 à environ 60 pour cent en poids d'un matériau particulaire solide; et
(d) environ 0,2 à environ 15 pour cent en poids d'un plastifiant pour ledit polyester isotropique;
dans lequel les pourcentages en poids de (a) et de (c) sont par rapport au poids de la composition totale, et les pourcentages en poids de (b) et de (d) sont par rapport au poids de (a) dans ladite composition.

20. Procédé selon la revendication 19, dans lequel ledit polyester isotropique a un point de fusion d'environ 200° ou plus.

21. Procédé selon la revendication 19 ou 20, dans lequel ledit polyester isotropique consiste essentiellement en motifs répétés issus d'un ou plusieurs parmi l'acide téréphtalique, l'acide isophtalique et l'acide 2,6-naphtalène dicarboxylique, et en motifs répétés issus d'un ou plusieurs parmi HO(CH₂)ₙOH, 1,4-cyclohexanediméthanol, HO(CH₂CH₂O)ₘCH₂CH₂OH, et HO(CH₂CH₂CH₂CH₂O)_{z}CH₂CH₂CH₂CH₂,OH, où n est un entier de 2 à 10, m est une moyenne de 1 à 4 et z est une moyenne d'environ 7 à environ 40.

22. Procédé selon l'une quelconque des revendications 19-21, dans lequel ledit polyester isotropique est un poly(téréphtalate d'éthylène), un poly(téréphtalate de 1,3-propylène), un poly(téréphtalate de 1,4-butylène) ou un poly(téréphtalate de 1,4-cyclohexyldiméthylène).

23. Procédé selon l'une quelconque des revendications 19-22, dans lequel ledit plastifiant représente environ 3,0 à environ 10 pour cent en poids dudit polyester isotropique.

24. Procédé selon l'une quelconque des revendications 19-23, dans lequel ledit polymère cristallin liquide représente environ 1,0 à environ 10 pour cent en poids dudit polyester isotropique.

25. Procédé selon l'une quelconque des revendications 19-24, dans lequel ledit matériau particulaire solide représente environ 5 à environ 50 pour cent en poids de ladite composition totale.

26. Procédé selon l'une quelconque des revendications 19-25, comprenant de plus un agent renforçant polymère contenant une ou plusieurs sortes de groupes fonctionnels qui peuvent réagir avec le polyester isotropique.

27. Procédé selon la revendication 26, dans lequel ledit groupe fonctionnel est époxy.

28. Procédé selon la revendication 27, dans lequel ledit agent renforçant polymère comprend des motifs répétés issus d'un (méth)acrylate contenant époxy et d'éthylène.

29. Procédé selon l'une quelconque des revendications 19-28, dans lequel ladite composition contient moins de 25ppm de cation métallique libre.
